# EUROPÄISCHE PATENTSCHRIFT

(11) **EP 3 879 364 B1**
(45) Veröffentlichungstag und Bekanntmachung des Hinweises auf die Patenterteilung: **21.12.2022**
(21) Anmeldenummer: 21152660.3
(22) Anmeldetag: 21.01.2021
(51) Int. Cl.: G05B 19/042, G06F 21/44

(54) **VERFAHREN MIT EINEM SYSTEM ZUR IDENTIFIZIERUNG VON TRANSPONDERN UND EIN SYSTEM ZUR IDENTIFIZIERUNG VON TRANSPONDERN**
METHOD WITH A TRANSPONDER IDENTIFICATION SYSTEM AND A TRANSPONDER IDENTIFICATION SYSTEM
PROCÉDÉ DOTÉ D'UN SYSTÈME D'IDENTIFICATION DES TRANSPONDEURS ET SYSTÈME D'IDENTIFICATION DES TRANSPONDEURS

(30) Priorität: 09.03.2020 DE 102020106351
(43) Veröffentlichungstag der Anmeldung: 15.09.2021
(73) Patentinhaber: SICK AG, 79183 Waldkirch (DE)
(72) Erfinder: Schwarz, Adrian, 79215 Elzach (DE); Schunke, Stefan, 09113 Chemnitz (DE)

(56) Entgegenhaltungen:
- DE-A1-102012 009 494
- US-A1- 2015 121 507
- US-A1- 2015 134 856
- Unknown: "IO-Link System Description - Technology and Application", , 1. März 2018 (2018-03-01), Seiten 1-20, XP055817755, Gefunden im Internet: URL:https://io-link.com/share/Downloads/At -a-glance/IO-Link_System_Description_eng_2 018.pdf [gefunden am 2021-06-24]

## Beschreibung

Die vorliegende Erfindung betrifft ein Verfahren mit einem System zur Identifizierung von Transpondern gemäß dem Oberbegriff von Anspruch 1 und ein System zur Identifizierung von Transpondern gemäß dem Oberbegriff von Anspruch 5.

Eine aktuelle Anwendung von Transpondern bzw. RFID-Tags in der Sicherheitstechnik beschränkt sich bisher darauf die Identifizierungscodes von Transpondern oder RFID-Tags mit einem eingelernten Identifizierungscode oder eine Anzahl von Identifizierungscodes zu vergleichen und ein binäres Signal bei einer Übereinstimmung über sicherheitsgerichtete Ausgänge auszugeben.

Für einige Sicherheitsaufgaben ist es relevant nicht nur die Übereinstimmung, sondern den Identifizierungscode an sich zu kennen, um Identifikationsaufgaben im Sinne einer sicherheitsgerichteten Funktion realisieren zu können. Diese ist z. B. bei der Anwendung bzw. Applikation zur sicheren Identifikation von Werkzeugen am Roboter notwendig. Die Ausführung des Werkzeuges bestimmt sicherheitsrelevante Betriebsparameter wie Bewegungskurven, Geschwindigkeit, usw.

Aktuell gibt es keine einfache Punkt-zu-Punkt-Kommunikation, um die Identifizierungscodes als sichere Information zu übermitteln. Entweder sind die Ausgänge auf binäre Zustände limitiert oder es müssen aufwändige Kommunikationsprotokolle zum Einsatz kommen, die wirtschaftlich nicht in Sensoren bzw. Sicherheitsschalter realisiert werden können

Die US 20150121507 A1 offenbart eine sichere Datenkommunikation in industriellen Prozesssteuerungsarchitekturen, die ein Netzwerk von Sensoren und Aktuatoren verwenden. In verschiedenen Ausführungsformen werden Daten durch ein sicheres serielles Übertragungssystem gesichert, das IO-Link-Geräte erkennt und authentifiziert, die mit sicheren Transceiver-Schaltungen ausgestattet sind, wodurch sichergestellt wird, dass nicht vertrauenswürdige oder nicht qualifizierte Hardware daran gehindert wird, sich mit einem Netzwerk zu verbinden und möglicherweise Beeinträchtigung des Systemverhaltens erfolgt

Das Dokument "IO-Link System Description - Technology and Application" der IO-Link Community beschreibt das IO-Link System und dessen Anwendung.

Die DE10 2012 009 494 A1 offenbart eine Steuereinrichtung zum Steuern eines Sicherheitsgerätes, das mittels eines IO-Links an eine Masterbaugruppe anschließbar ist, wobei ein Sicherheitsprotokoll über eine IO-Link-Verbindung übermittelbar ist.

Eine Aufgabe der Erfindung besteht darin, eine möglichst einfache sichere Identifikation von RFID-Tags zu ermöglichen.

Die Aufgabe wird gemäß Anspruch 1 gelöst durch ein Verfahren zur Identifizierung von Transpondern aufgrund von Identifizierungscodes mit einem System umfassend einen Sensor und einer Steuerung, wobei der Sensor ein Basisgehäuse aufweist, wobei das Basisgehäuse ein RFID-Lesegerät, eine Steuer- und Auswerteeinheit, zwei sicherheitsgerichtete Schaltausgänge und einen I/O-Link Anschluss aufweist, wobei die Steuerung Eingänge aufweist, wobei die Eingänge der Steuerung jeweils mit den zwei sicheren Schaltausgängen und dem IO-Link-Anschluss des Sensors verbunden sind, oder mindestens ein Busmodul Eingänge aufweist, wobei die Eingänge des Busmoduls jeweils mit den zwei sicherheitsgerichteten Schaltausgängen und dem I/O-Link-Anschluss des Sensors verbunden werden, und das Busmodul eine Schnittstelle aufweist, welche mit einem Eingang der Steuerung verbunden wird, wobei der Sensor eine erste Speichereinheit aufweist zur Speicherung einer Auswahl von gültigen Identifizierungscodes, wobei bei Erkennung eines gültigen Transponders ein Signal auf den sicherheitsgerichteten Schaltausgängen und der Identifizierungscode auf dem I/O-Link Anschluss ausgegeben wird, wobei die Steuerung eine zweite Speichereinheit aufweist zur Speicherung der Auswahl von gültigen Identifizierungscodes, wobei die Steuerung ausgebildet ist die Auswahl von gültigen Identifizierungscodes mit dem gelesenen Identifizierungscode zu vergleichen und bei einem gültigen Vergleich ein geprüftes Ergebnissignal erzeugt wird, wobei bei Detektion von Signalen auf den sicherheitsgerichteten Schaltausgängen das Ergebnissignal erzeugt wird.

Die Aufgabe wird weiter gemäß Anspruch 5 gelöst durch ein System zur Identifizierung von Transpondern aufgrund von Identifizierungscodes mit einem Sensor und einer Steuerung, wobei der Sensor ein Basisgehäuse aufweist, wobei das Basisgehäuse ein RFID-Lesegerät, eine Steuer- und Auswerteeinheit, zwei sicherheitsgerichtete Schaltausgänge und einen I/O-Link Anschluss aufweist, wobei die Steuerung Eingänge aufweist, wobei die Eingänge der Steuerung jeweils mit den zwei sicheren Schaltausgängen und dem IO-Link-Anschluss des Sensors verbunden sind, oder mindestens ein Busmodul Eingänge aufweist, wobei die Eingänge des Busmoduls jeweils mit den zwei sicherheitsgerichteten Schaltausgängen und dem I/O-Link-Anschluss des Sensors verbunden sind, und das Busmodul eine Schnittstelle aufweist, welche mit einem Eingang der Steuerung verbunden ist, wobei der Sensor eine erste Speichereinheit aufweist zur Speicherung einer Auswahl von gültigen Tag-Identifizierungscodes, wobei die Steuer- und Auswerteeinheit ausgebildet ist, bei Erkennung eines gültigen Transponders ein Signal auf den sicherheitsgerichteten Schaltausgängen und den Identifizierungscode auf dem I/O-Link Anschluss auszugeben,
wobei die Steuerung eine zweite Speichereinheit aufweist zur Speicherung der Auswahl von gültigen Identifizierungscodes, wobei die Steuerung ausgebildet ist die Auswahl von gültigen Identifizierungscodes mit dem gelesenen Identifizierungscode zu vergleichen und bei einem gültigen Vergleich ein geprüftes Ergebnissignal zu erzeugen, wobei bei Detektion von Signalen auf den sicherheitsgerichteten Schaltausgängen das Ergebnissignal erzeugt wird.

Gemäß einer ersten Alternative der Erfindung werden die sicherheitsgerichteten Schaltausgänge über sicherheitsgerichtete Eingänge an die Steuerung angeschlossen. Dabei können die sicherheitsgerichteten Schaltausgänge direkt an die Steuerung angeschlossen sein. Die Schaltausgänge sind sicherheitsgerichtet, da diese redundant vorhanden sind und beispielsweise zyklisch auf Fehler, wie z.B. Kurzschlüsse, geprüft werden. Gemäß einer zweiten Alternative der Erfindung weist mindestens ein Busmodul Eingänge auf, wobei die Eingänge des Busmoduls jeweils mit den zwei sicherheitsgerichteten Schaltausgängen und dem I/O-Link-Anschluss des Sensors verbunden sind, und das Busmodul eine Schnittstelle aufweist, welche mit einem Eingang der Steuerung verbunden ist. Dabei sind die Signale über ein Zwischenmodul wie beispielsweise ein Feldknoten oder ein Busmodul an die Steuerung angeschlossen.

Gemäß der zweiten Alternative sind ein oder mehrere Busmodule zwischen Sensor und Steuerung geschaltet, die ggf. auch die Signale der Ausgänge des Sensors in ein weiteres insbesondere sicherheitsgerichtetes Signal integrieren können, welches dann von der Steuerung empfangen wird, und woraus die Steuerung die Sensorinformation extrahieren bzw. wiederherstellen kann bevor die Information weiterverarbeitet wird. Beispielsweise erfolgt eine Bündelung der Sensorinfos in ein ProfiSAFE Signal.

Der I/O-Link Anschluss des Sensors wird an einen I/O-Link Master an Eingängen der Steuerung angeschlossen. Dabei können die I/O-Link Anschlüsse direkt an die Steuerung angeschlossen sein, oder über ein Zwischenmodul wie beispielsweise ein Feldknoten oder ein Busmodul an die Steuerung angeschlossen werden.

Bei dem Eingang der Steuerung, an den der I/O-Link Anschluss des Sensors angeschlossen ist, kann es sich auch um einen I/O-Link Anschluss der Steuerung handeln.

Bei dem I/O-LinkAnschluss der Steuerung kann es sich insbesondere um einen I/O-Link Master Port handeln.

Mit der Bezeichnung I/O-Link oder IO-Link ist ein Kommunikationssystem zur Anbindung intelligenter Sensoren und Aktoren an ein Automatisierungssystem in der Norm IEC 61131-9 unter der Bezeichnung Single-drop digital communication interface for small sensors and actuators (SDCI) normiert. Die Standardisierung umfasst dabei sowohl die elektrischen Anschlussdaten als auch ein digitales Kommunikationsprotokoll, über das die Sensoren und/oder Aktoren mit dem Automatisierungssystem in Datenaustausch treten.

Ein IO-Link-System besteht aus einem IO-Link-Master und einem oder mehreren IO-Link-Geräten, also Sensoren oder Aktoren. Der IO-Link-Master stellt die Schnittstelle zur überlagerten Steuerung (SPS) zur Verfügung und steuert die Kommunikation mit den angeschlossenen IO-Link-Geräten.

Ein IO-Link-Master kann einen oder mehrere IO-Link-Ports haben, an dem jeweils nur ein Device angeschlossen werden kann. Dies kann auch ein "Hub" sein, der als Konzentrator den Anschluss von klassisch schaltenden Sensoren und Aktoren ermöglicht.

Ein IO-Link-Gerät kann ein intelligenter Sensor, Aktor, Hub, oder aber bedingt durch die bidirektionale Kommunikation auch eine Mechatronik-Komponente z. B. ein Greifer oder ein Netzteil mit IO-Link-Anbindung sein. Intelligent heißt im Hinblick auf IO-Link, dass ein Gerät Identifikationsdaten z. B. eine Typbezeichnung und eine Seriennummer oder Parameterdaten (z. B. Empfindlichkeiten, Schaltverzögerungen oder Kennlinien) besitzt, die über das IO-Link-Protokoll lesbar bzw. schreibbar sind. Das Ändern von Parametern kann damit z. T. im laufenden Betrieb durch die SPS erfolgen. Intelligent heißt aber auch, dass es detaillierte Diagnoseinformationen liefern kann.

Die Parameter der Sensoren und Aktoren sind geräte- und technologiespezifisch, daher gibt es für jedes Gerät Parameterinformationen in Form einer IODD (IO Device Description) mit der Beschreibungssprache XML. Die IO-Link Community stellt Schnittstellen zu einem "IODD Finder" zur Verfügung, der von Engineering- oder Master-Tools genutzt werden kann, um zu einem Device die passende IODD zu präsentieren.

IO-Link setzt auf die klassischen 24 V Signale der IEC 61131-2. Die Signalpegel "0" (0 V) bzw. "1" (24 V) zeigten traditionell das Über- oder Unterschreiten eines Schwellenwertes an. Dieser Betrieb wird als "Schalt-Modus" oder SIO bezeichnet. Bei IO-Link kann dieses Schalten (0/1) rasch hintereinander und codiert durchgeführt werden. Die Codierung und die daraus folgenden Rahmen und Datenpakete sind im IO-Link-Protokoll festgelegt.

In der Steuerung werden die zu erwartenden Identifizierungscodes von z. B. zu identifizierenden Objekten z. B. von Werkzeugen eingelernt bzw. eingegeben und z. B. in einer Look-up Tabelle abgelegt. Dabei handelt es sich um eine Vielzahl von Identifizierungscodes die eine Auswahl von möglichen Identifizierungscodes sind. Da eine prinzipielle Systematik einer Identifizierungscode Vergabe mehrere Millionen Identifizierungscodes generieren kann, bei ausreichender Codelänge, und keine doppelten Identifizierungscodes generiert werden, entsteht mit der Auswahl eine Erwartungshaltung gegenüber einer Gesamtanzahl von mehreren Millionen möglichen Identifizierungscodes und damit eine Probabilistik gegen zufällige Fehler.

Beispielsweise sind unterschiedliche Transponder bzw. RFID-Tags bzw. Betätigerelemente an unterschiedlichen Positionen entlang eines Tores oder einer Linearachse angeordnet. Von dem Sensor werden die unterschiedlichen Transponder während des Öffnens oder Schließens des Tores bzw. des Verfahrens der Linearachse nacheinander detektiert. Aufgrund der Unterscheidung der Transponder durch die Steuer- und Auswerteeinheit können die verschiedenen Positionen des Tores bzw. des Schlittens auf der Linearachse detektiert werden. Daraufhin können von der Steuerung bzw. Sicherheitssteuerung jeweils unterschiedliche Reaktionen ausgelöst werden.

Der Sensor und der Transponder bzw. das RFID-Tag bilden ein RFID-System (Radio Frequency Identification), wobei das Sensorelement des Sensors eine Antennenanordnung zur Kommunikation mit dem Transponder bzw. dem RFID-Tag bzw. einem Betätigerelement ist, wobei der Transponder einen Träger und wenigstens eine an dem Träger befestigte Spule zur Wechselwirkung mit der Antennenanordnung des Sensorelements umfassen kann.

RFID-Systeme werden in Sender/Empfänger-Systemen zum automatischen und berührungslosen Identifizieren und/oder Lokalisieren von Objekten mit Radiowellen verwendet. Ein RFID-System umfasst typischerweise zunächst den Transponder (auch als "Tag" oder "Funketikett" bezeichnet), der eine Antenne umfasst und sich optional am oder im Betätigerelement befindet. Er umfasst den Identifizierungscode bzw. kennzeichnenden Code, der über die Antennenanordnung von einem Lesegerät des RFID-Systems (auch als "Transceiver" bezeichnet) abgefragt werden kann. Der Transceiver umfasst dazu die Antennenanordnung und einen Transceiverschaltkreis (z.B. der EM4095-Chip der Firma EM Microelectronics) zum Auslesen des Identifizierungscodes von dem Transponder. Zum Auslesen der Kennung bzw. des Identifizierungscodes von dem Transponder erzeugt das Lesegerät typischerweise elektromagnetische Wechselfelder, um Signale an den Transponder zu übertragen. Der Transponder ist dazu ausgebildet, nach Erhalt eines entsprechenden Signals vom Lesegerät, den Identifizierungscode als Antwortsignal an das Lesegerät zurückzusenden, welches dieses mit der Steuer- und Auswerteeinheit auswertet und weiterverarbeitet.

Bei RFID-Systemen geringer Reichweite (typischerweise kleiner als 50 mm Reichweite), erzeugt das Lesegerät elektromagnetische Wechselfelder, die nicht nur zum Übertragen der Daten vorgesehen sind, sondern oftmals auch dazu dienen, den Transponder mit Energie zu versorgen.

Ein RFID-System hat den Vorteil, dass das Betätigungselement, also der Transponder, keine eigene Stromversorgung benötigt und daher flexibel eingesetzt werden kann. Der Transponder bezieht seine Energie über Funkwellen bzw. Radiowellen aus dem RFID-System. Der Transponder wird über die Antennenanordnung des RFID-Systems angesprochen und antwortet dem RFID-System mit einer in dem Transponder abgespeicherten Information. Die vom Transponder des RFID-Systems übertragene Information wird von der Antennenanordnung empfangen und kann anschließend in der Auswerteeinheit ausgewertet werden. Die gespeicherte Information im Transponder enthält mindestens eine Kennung, die den Transponder identifiziert.

Da die Erkennung des Transponders über Funkwellen erfolgt, ist das System sehr robust gegenüber Umwelteinflüssen. Daher kann das RFID-System mit dem Transponder in sehr rauen Umgebungen eingesetzt werden, beispielsweise in Industrieumgebungen, wo Schmierstoffe verwendet werden und es beispielsweise zu einem hohen Verschmutzungsgrad kommen kann.

Da die Erkennung des Transponders über Funkwellen erfolgt, ist, im Unterschied zu einer optischen Lösung, keine Sichtverbindung zwischen dem Sicherheitssensor und dem Betätigungselement notwendig. Daher kann der Sicherheitssensor und das Betätigungselement vollständig gekapselt werden, um diese vor schädlichen Umwelteinflüssen zu schützen.

Der Identifizierungscode weist beispielsweise ein Format nach ISO 11785 auf. Der Identifizierungscode weist beispielsweise eine Kopfinformation (Header), eine Nutzinformation (Identifizierungscode), ein Prüffeld (z. B. CRC-Codierung) und ggf. ein Erweiterungsfeld (Extension) auf. Beispielsweise hat der Header eine Größe von 11 Bits, die Nutzinformation eine Größe von 64 Bits, das Prüffeld eine Größe von 16 Bits und das Erweiterungsfeld eine Größe von 24 Bits.

In Weiterbildung der Erfindung ist die Auswahl von gültigen Identifizierungscodes eine Auswahl von 1 bis 10000, eine Auswahl von 1 bis 1000 oder insbesondere eine Auswahl von 1 bis 100 Identifizierungscodes aus einer Vielzahl von Identifizierungscodes. Beispielsweise beträgt die Vielzahl mehr als 100000 Identifizierungscodes oder mehr als 1000000 Identifizierungscodes.

Das Format des Identifizierungscodes lässt dabei mehrere Millionen Codes zu. Beispielsweise handelt es sich bei dem Identifizierungscode um eine Codelänge von mehreren Bytes, wobei ein Byte eine Information von 8 Bit beinhaltet.

Durch die sehr begrenzte Auswahl gemäß der Weiterbildung entsteht mit der Auswahl eine Erwartungshaltung und damit ein Probabilistik gegen zufällige Fehler. Je kleiner die Auswahl ist, desto höher ist die Wahrscheinlichkeit, dass keine zufälligen Fehler in dem Identifizierungscode auftreten.

In Weiterbildung der Erfindung wird der Identifizierungscode auf dem I/O-Link Anschluss nicht invertiert und invertiert übertragen. Damit erfolgt eine redundante und unterschiedliche Datenübertragung wodurch systematische und zufällige Fehler aufgedeckt werden können. Die Übertragung erfolgt nacheinander.

In Weiterbildung der Erfindung kann zusätzlich zu dem Identifizierungscode noch ein Verifikationscode übertragen werden, wodurch eine Testung des Systems erfolgt.

Beispielsweise wird zusätzlich zu dem Identifizierungscode, und ggf. dem Verifikationscode, noch eine Zählerinformation übertragen, wodurch eine Überprüfung der Datenreihenfolge erfolgen kann.

Beispielsweise wird zusätzlich zu dem Identifizierungscode, ggf. dem Verifikationscode und/oder der Zählerinformation, noch eine CRC-Prüfsumme übertragen.

Dadurch erfolgt eine permanente Testung des Systems und es wird eine Sicherstellung einer Datenintegrität erreicht.

Der Verifikationscode kann beispielsweise abhängig vom Identifizierungscode generiert werden. Bevorzugt ist der Verifikationscode ein dynamischer Code mit veränderlichem Inhalt. Jedoch können auch statische Verifikationscodes vorgesehen werden. Beispielsweise hat ein Verifikationscode eine Binärfolge von abwechselnd NULL und EINS.

Gemäß der Erfindung wird bei Detektion eines gültigen Identifikationscodes auf den sicheren Schaltausgängen das Ergebnissignal erzeugt.

Die sicheren Schaltausgänge weisen nur ein aktives Signal, beispielsweise logisch EINS auf, wenn einer der zu erwarteten und eingelernten Identifizierungscodes vom Sensor gelesen wird. Ist kein eingelernter oder kein gültiger Identifizierungscode erfasst worden weisen die Schaltausgänge ein inaktives Signal oder kein aktives Signal auf, beispielsweise logisch NULL.

In Weiterbildung der Erfindung ist der Identifizierungscode bzw. die Kennung bzw. Kodierung in dem Transponder veränderbar bzw. in den Transponder einlernbar. Dadurch können die Transponder beliebig konfiguriert bzw. umkonfiguriert werden. Die Veränderung der Identifizierungscode kann beispielsweise direkt über Schreibmittel des Sensors erfolgen. Jedoch kann es auch vorgesehen sein, ein Konfigurationsgerät beispielsweise für den Anschluss an einen Personalcomputer (PC) bereitzustellen.

In Weiterbildung der Erfindung ist die Steuer- und Auswerteeinheit dazu ausgebildet, auf den Sicherheitsausgängen zyklisch Testpulse auszugeben. Mit Hilfe der Testpulse kann der Sensor und/oder die Steuerung überprüfen, ob die Sicherheitsausgänge keinen Fehler aufweisen und daher fehlersicher sind. Beispielsweise können Querschlüsse zwischen den Sicherheitsausgängen oder Kurzschlüsse an den Sicherheitsausgängen zu Fehlern führen. Durch die Testpulse können derartige Fehler aufgedeckt werden. Die Testpulse haben hierzu ca. eine Breite von 20 µs bis 400 µs, wodurch das Betätigungssignal nur kurzzeitig unterbrochen wird, beispielsweise zyklisch in Abständen von 10 ms bis 400 ms, so dass das eigentliche Betätigungssignal nicht gestört wird. Im Falle eines Querschlusses oder Kurzschlusses wird der Testpuls gestört, wobei diese Störung des Testpulses zu einer Fehlerdetektion führt.

Der Sensor und/oder die Steuerung bzw. Sicherheitssteuerung sind bevorzugt zweikanalig redundant oder beispielsweise zweikanalig diversitär aufgebaut. Weiter beinhalten die Geräte Testfunktionen, die dazu ausgebildet sind, interne Bauteilversagen und externe Fehler in der Beschaltung wie oben erläutert zu erkennen, um eine überwachte Anlage bei Auftreten eines Fehlers in einen sicheren Zustand zu bringen. Bevorzugt ist der Sensor und/oder die Steuerung fehlersicher im Sinne der Kategorie 3 oder höher gemäß der europäischen Norm ISO 13849-1, im Sinne von SIL2 oder höher gemäß der internationalen Norm IEC 61508 oder im Sinne vergleichbarer Vorschriften. Beispielsweise sind zwei redundante Signalverarbeitungskanäle in Form von beispielsweise zwei Mikrocontrollern vorgesehen.

In Weiterbildung der Erfindung sind die Sicherheitsausgänge Schaltausgänge mit einer Schaltspannung von ca. 24 Volt. Schaltausgänge mit einer Schaltspannung von 24 V sind sehr robust und vielseitig einsetzbar. So kann mit den Schaltausgängen auch direkt ein Aktor, beispielsweise ein Schütz, direkt angesteuert werden oder die direkte Verbindung mit einer Sicherheitssteuerung hergestellt werden.

Der Sensor kann für eine sichere Positionierung eingesetzt werden, insbesondere bei Maschinen und Anwendungen der Intralogistik. Weiter kann der Sensor für Zugangsanwendungen eingesetzt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

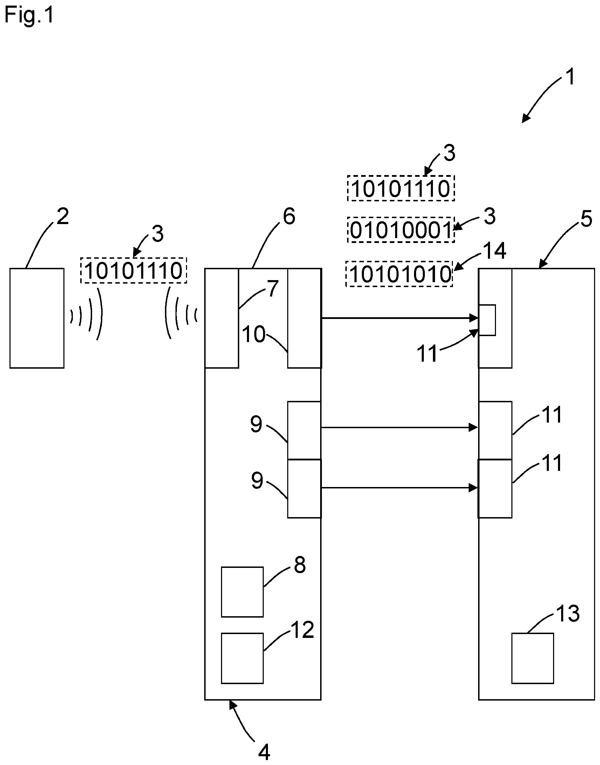

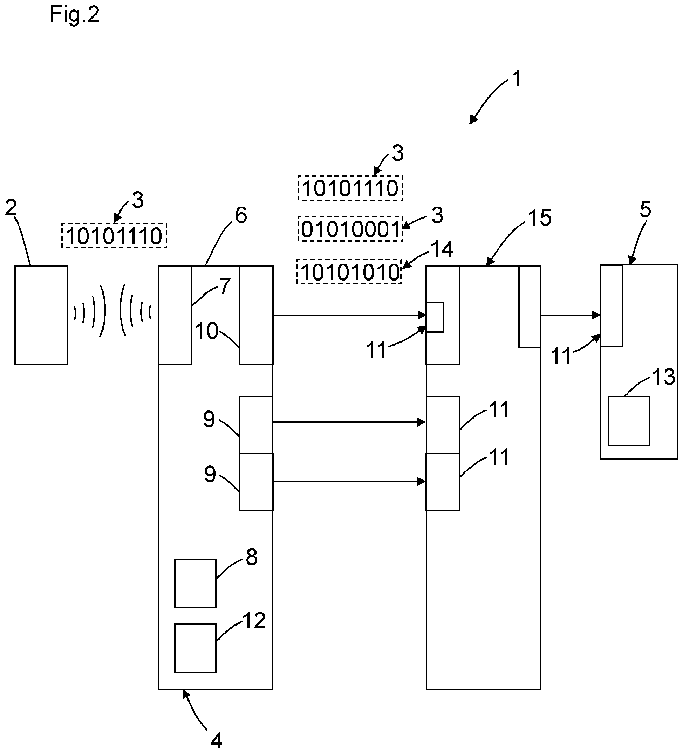

Figur 1 und Figur 2 jeweils ein System zur Identifizierung von Transpondern.

In den nachfolgenden Figuren sind identische Teile mit identischen Bezugszeichen versehen.

Figur 1 zeigt ein System 1 zur Identifizierung von Transpondern 2 aufgrund von Identifizierungscodes 3 mit einem Sensor 4 und einer Steuerung 5, wobei der Sensor 4 ein Basisgehäuse 6 aufweist, wobei das Basisgehäuse 6 ein RFID-Lesegerät 7, eine Steuer- und Auswerteeinheit 8, zwei sicherheitsgerichtete Schaltausgänge 9 und einen I/O-Link Anschluss 10 aufweist, wobei die Steuerung 5 Eingänge 11 aufweist, wobei die Eingänge 11 der Steuerung 5 jeweils mit den zwei sicheren Schaltausgängen 9 und dem I/O-Link Anschluss 10 des Sensors 4 verbunden sind, wobei der Sensor 4 eine erste Speichereinheit 12 aufweist zur Speicherung einer Auswahl von gültigen Tag-Identifizierungscodes, wobei die Steuer- und Auswerteeinheit 8 ausgebildet ist, bei Erkennung eines gültigen Transponders 2 ein Signal auf dem sicherheitsgerichteten Schaltausgang 9 und den Identifizierungscode 3 auf dem I/O-Link Anschluss 10 auszugeben, wobei die Steuerung 5 eine zweite Speichereinheit 13 aufweist zur Speicherung einer Auswahl von gültigen Identifizierungscodes 3, wobei die Steuerung 5 ausgebildet ist die Auswahl von gültigen Identifizierungscodes 3 mit dem gelesenen Identifizierungscode 3 zu vergleichen und bei einem gültigen Vergleich ein geprüftes Ergebnissignal zu erzeugen.

Figur 2 zeigt ein System 1 zur Identifizierung von Transpondern 2 aufgrund von Identifizierungscodes 3 mit einem Sensor 4 und einer Steuerung 5, wobei der Sensor 4 ein Basisgehäuse 6 aufweist, wobei das Basisgehäuse 6 ein RFID-Lesegerät 7, eine Steuer- und Auswerteeinheit 8, zwei sicherheitsgerichtete Schaltausgänge 9 und einen I/O-Link Anschluss 10 aufweist, wobei die Steuerung 5 Eingänge 11 aufweist, wobei ein Busmodul 15 Eingänge 11 aufweist, wobei die Eingänge 11 des Busmoduls 15 jeweils mit den zwei sicherheitsgerichteten Schaltausgängen 9 und dem I/O-Link-Anschluss 10 des Sensors verbunden sind, und das Busmodul eine Schnittstelle aufweist, welche mit einem Eingang 11 der Steuerung verbunden ist wobei der Sensor 4 eine erste Speichereinheit 12 aufweist zur Speicherung einer Auswahl von gültigen Tag-Identifizierungscodes, wobei die Steuer- und Auswerteeinheit 8 ausgebildet ist, bei Erkennung eines gültigen Transponders 2 ein Signal auf dem sicherheitsgerichteten Schaltausgang 9 und den Identifizierungscode 3 auf dem I/O-Link Anschluss 10 auszugeben, wobei die Steuerung 5 eine zweite Speichereinheit 13 aufweist zur Speicherung einer Auswahl von gültigen Identifizierungscodes 3, wobei die Steuerung 5 ausgebildet ist die Auswahl von gültigen Identifizierungscodes 3 mit dem gelesenen Identifizierungscode 3 zu vergleichen und bei einem gültigen Vergleich ein geprüftes Ergebnissignal zu erzeugen.

Bei dem Eingang 11, an den der I/O-Link Anschluss 10 des Sensors angeschlossen ist; kann es sich auch um einen I/O-Link Anschluss der Steuerung 5 handeln. Bei dem I/O-Link Anschluss der Steuerung 5 kann es sich insbesondere um einen I/O-Link Master Port handeln.

Die sicherheitsgerichteten Schaltausgänge 9 werden über sicherheitsgerichtete Eingänge 11 an die Steuerung 5 angeschlossen. Dabei sind die sicherheitsgerichteten Schaltausgänge 9 direkt an die Steuerung 5 angeschlossen.

Der I/O-Link Anschluss 10 des Sensors wird an einen I/O-Link Master an Eingängen 11 der Steuerung 5 angeschlossen. Dabei sind die I/O-Link Ausgänge 10 direkt an die Steuerung 5 angeschlossen.

In der Steuerung 5 werden die zu erwartenden Identifizierungscodes 3 von z. B. zu identifizierenden Objekten z. B. von Werkzeugen eingelernt bzw. eingegeben und z. B. in einer Look-up Tabelle abgelegt. Dabei handelt es sich um eine Vielzahl von Identifizierungscodes 3 die eine Auswahl von möglichen Identifizierungscodes 3 sind.

DerSensor4 und der Transponder 2 bzw. das RFID-Tag bilden ein RFID-System (Radio Frequency Identification), wobei das Sensorelement des Sensors 4 eine Antennenanordnung zur Kommunikation mit dem Transponder 2 bzw. dem RFID-Tag bzw. einem Betätigerelement ist, wobei der Transponder 2 einen Träger und wenigstens eine an dem Träger befestigte Spule zur Wechselwirkung mit der Antennenanordnung des Sensorelements umfassen kann.

Der Identifizierungscode 3 weist beispielsweise ein Format nach ISO 11785 auf. Der Identifizierungscode 3 weist beispielsweise eine Kopfinformation (Header), eine Nutzinformation (Identifizierungscode), ein Prüffeld (z. B. CRC-Codierung) und ggf. ein Erweiterungsfeld (Extension) auf. Beispielsweise hat der Header eine Größe von 11 Bits, die Nutzinformation eine Größe von 64 Bits, das Prüffeld eine Größe von 16 Bits und das Erweiterungsfeld eine Größe von 24 Bits.

Das Format des Identifizierungscodes 3 lässt dabei mehrere Millionen Codes zu. Beispielsweise handelt es sich bei dem Identifizierungscode 3 um eine Codelänge von mehreren Bytes, wobei ein Byte eine Information von 8 Bit beinhaltet.

Durch die sehr begrenzte Auswahl gemäß der Weiterbildung entsteht mit der Auswahl eine Erwartungshaltung und damit ein Probabilistik gegen zufällige Fehler. Je kleiner die Auswahl ist, desto höher ist die Wahrscheinlichkeit, dass keine zufälligen Fehler in dem Identifizierungscode 3 auftreten.

Gemäß Figur 1 wird der Identifizierungscode 3 auf dem I/O-Link Anschluss 10 optional nicht invertiert und invertiert übertragen. Damit erfolgt eine redundante und unterschiedliche Datenübertragung wodurch systematische und zufällige Fehler aufgedeckt werden können. Die Übertragung erfolgt nacheinander.

Gemäß Figur 1 wird zusätzlich zu dem Identifizierungscode 3 noch optional ein Verifikationscode 14 übertragen, wodurch eine Testung des Systems 1 erfolgt.

Der Verifikationscode 14 kann beispielsweise abhängig vom Identifizierungscode 3 generiert werden. Bevorzugt ist der Verifikationscode 14 ein dynamischer Code mit veränderlichem Inhalt. Jedoch können auch statische Verifikationscodes 14 vorgesehen werden. Beispielsweise hat ein Verifikationscode 14 eine Binärfolge von abwechselnd NULL und EINS.

Beispielsweise wird zusätzlich zu dem Identifizierungscode, und ggf. dem Verifikationscode, noch eine Zählerinformation übertragen, wodurch eine Überprüfung der Datenreihenfolge erfolgen kann.

Beispielsweise wird zusätzlich zu dem Identifizierungscode, ggf. dem Verifikationscode und/oder der Zählerinformation, noch eine CRC-Prüfsumme übertragen.

Gemäß Figur 1 wird bei Detektion der Signale auf den sicheren Schaltausgängen 9 das Ergebnissignal erzeugt.

Die sicheren Schaltausgänge 9 weisen nur ein aktives Signal, beispielsweise logisch EINS auf, wenn einer der zu erwarteten und eingelernten Identifizierungscodes 3 vom Sensor 4 gelesen wird. Ist kein eingelernter oder kein gültiger Identifizierungscode 3 erfasst worden weisen die Schaltausgänge 9 ein inaktives Signal oder kein aktives Signal auf, beispielsweise logisch NULL.

Gemäß Figur 1 ist der Identifizierungscode 3 bzw. die Kennung bzw. Kodierung optional in dem Transponder 2 veränderbar bzw. in den Transponder 2 einlernbar. Dadurch können die Transponder 2 beliebig konfiguriert bzw. umkonfiguriert werden. Die Veränderung der Identifizierungscode 2 kann beispielsweise direkt über Schreibmittel des Sensors 4 erfolgen. Jedoch kann es auch vorgesehen sein, ein Konfigurationsgerät beispielsweise für den Anschluss an einen Personalcomputer (PC) bereitzustellen.

Gemäß Figur 1 ist die Steuer- und Auswerteeinheit 8 des Sensors 4 optional dazu ausgebildet, auf den Sicherheitsausgängen 9 zyklisch Testpulse auszugeben. Die Testpulse haben hierzu ca. eine Breite von 20 µs bis 400 µs, wodurch das Betätigungssignal nur kurzzeitig unterbrochen wird, beispielsweise zyklisch in Abständen von 10 ms bis 400 ms, so dass das eigentliche Betätigungssignal nicht gestört wird.

Der Sensor 4 und/oder die Steuerung 5 bzw. Sicherheitssteuerung sind bevorzugt zweikanalig redundant oder beispielsweise zweikanalig diversitär aufgebaut. Weiter beinhalten die Geräte Testfunktionen, die dazu ausgebildet sind, interne Bauteilversagen und externe Fehler in der Beschaltung wie oben erläutert zu erkennen, um eine überwachte Anlage bei Auftreten eines Fehlers in einen sicheren Zustand zu bringen. Beispielsweise sind zwei redundante Signalverarbeitungskanäle in Form von beispielsweise zwei Mikrocontrollern vorgesehen.

Gemäß Figur 1 sind die Sicherheitsausgänge Schaltausgänge 9 mit einer Schaltspannung von beispielsweise ca. 24 Volt.

Der Sensor 4 bzw. das System 1 kann für eine sichere Positionierung eingesetzt werden, insbesondere bei Maschinen und Anwendungen der Intralogistik. Weiter kann der Sensor 4 für Zugangsanwendungen eingesetzt werden.

### Bezugszeichen:

1 System
2 Transponder
3 Identifizierungscode
4 Sensor
5 Steuerung
6 Basisgehäuse
7 RFID-Lesegerät
8 Steuer- und Auswerteeinheit
9 sicherheitsgerichtete Schaltausgänge
10 I/O-Link-Ausgang
11 Eingänge
12 erste Speichereinheit
13 zweite Speichereinheit
14 Verifikationscode

## Patentansprüche

1. Verfahren zur Identifizierung von Transpondern (2) aufgrund von Identifizierungscodes (3) mit einem System (1) umfassend einen Sensor (4) und einer Steuerung (5), wobei der Sensor (4) ein Basisgehäuse (6) aufweist, wobei das Basisgehäuse (6) ein RFID-Lesegerät (7), eine Steuer- und Auswerteeinheit (8), zwei sicherheitsgerichtete Schaltausgänge (9) und einen I/O-Link Anschluss (10) aufweist,
wobei die Steuerung (5) Eingänge (11) aufweist, wobei die Eingänge (11) der Steuerung (5) jeweils mit den zwei sicheren Schaltausgängen (9) und dem I/O-Link Anschluss (10) des Sensors (4) verbunden sind,
oder mindestens ein Busmodul (15) Eingänge (11) aufweist, wobei die Eingänge (11) des Busmoduls (15) jeweils mit den zwei sicherheitsgerichteten Schaltausgängen (9) und dem I/O-Link-Anschluss (10) des Sensors (4) verbunden werden, und das Busmodul (15) eine Schnittstelle aufweist, welche mit einem Eingang (11) der Steuerung (5) verbunden wird,
wobei der Sensor (4) eine erste Speichereinheit (12) aufweist zur Speicherung einer Auswahl von gültigen Identifizierungscodes (3),
wobei bei Erkennung eines gültigen Transponders (2) ein Signal auf dem sicherheitsgerichteten Schaltausgang (9) und der Identifizierungscode (3) auf dem I/O-Link Anschluss (10) ausgegeben wird,
**dadurch gekennzeichnet, dass** die Steuerung (5) eine zweite Speichereinheit (13) aufweist zur Speicherung der Auswahl von gültigen Identifizierungscodes (3),
wobei die Steuerung (5) ausgebildet ist die Auswahl von gültigen Identifizierungscodes (3) mit dem gelesenen Identifizierungscode (3) zu vergleichen und bei einem gültigen Vergleich ein geprüftes Ergebnissignal erzeugt wird, wobei bei Detektion von Signalen auf den sicherheitsgerichteten Schaltausgängen (9) das Ergebnissignal erzeugt wird.

2. Verfahren nach Anspruch 1, **dadurch gekennzeichnet, dass** die Auswahl von gültigen Identifizierungscodes (3) eine Auswahl von 1 bis 10000, eine Auswahl von 1 bis 1000 oder insbesondere eine Auswahl von 1 bis 100 Identifizierungscodes (3) aus einer Vielzahl von Identifizierungscodes (3) ist.

3. Verfahren nach mindestens einem der vorhergehenden Ansprüche, **dadurch gekennzeichnet, dass** der Identifizierungscode (3) auf dem I/O-Link Anschluss (10) nicht invertiert und invertiert übertragen wird.

4. Verfahren nach mindestens einem der vorhergehenden Ansprüche, **dadurch gekennzeichnet, dass** zusätzlich zu dem Identifizierungscode (3) noch ein Verifikationscode (14) übertragen wird wodurch eine Testung des Systems (1) erfolgt.

5. System (1) zur Identifizierung von Transpondern (2) aufgrund von Identifizierungscodes (3) mit einem Sensor (4) und einer Steuerung (5), wobei der Sensor (4) ein Basisgehäuse (6) aufweist, wobei das Basisgehäuse (6) ein RFID-Lesegerät (7), eine Steuer- und Auswerteeinheit (8), zwei sicherheitsgerichtete Schaltausgänge (9) und einen I/O-Link Anschluss (10) aufweist,
wobei die Steuerung (5) Eingänge (11) aufweist, wobei die Eingänge (11) der Steuerung (5) jeweils mit den zwei sicherheitsgerichteten Schaltausgängen (9) und dem I/O-Link-Anschluss (10) des Sensors verbunden sind,
oder mindestens ein Busmodul (15) Eingänge (11) aufweist, wobei die Eingänge (11) des Busmoduls (15) jeweils mit den zwei sicherheitsgerichteten Schaltausgängen (9) und dem I/O-Link-Anschluss (10) des Sensors (4) verbunden sind, und das Busmodul (15) eine Schnittstelle aufweist, welche mit einem Eingang (11) der Steuerung (5) verbunden ist,
wobei der Sensor (4) eine erste Speichereinheit (12) aufweist zur Speicherung einer Auswahl von gültigen Identifizierungscodes (3),
wobei die Steuer- und Auswerteeinheit (8) ausgebildet ist, bei Erkennung eines gültigen Transponders (2) ein Signal auf dem sicherheitsgerichteten Schaltausgang (9) und dem Identifizierungscode (3) auf dem I/O-Link Anschluss (10) auszugeben,
**dadurch gekennzeichnet, dass** die Steuerung (5) eine zweite Speichereinheit (13) aufweist zur Speicherung der Auswahl von gültigen Identifizierungscodes (3),
wobei die Steuerung (5) ausgebildet ist, die Auswahl von gültigen Identifizierungscodes (3) mit dem gelesenen Identifizierungscode (3) zu vergleichen und bei einem gültigen Vergleich ein geprüftes Ergebnissignal zu erzeugen, wobei bei Detektion von Signalen auf den sicherheitsgerichteten Schaltausgängen (9) das Ergebnissignal erzeugt wird.

## Claims

1. Method for identifying transponders (2) on the basis of identification codes (3) with a system (1) comprising a sensor (4) and a controller (5),
wherein the sensor (4) comprises a base housing (6),
wherein the base housing (6) comprises an RFID reader (7), a control and evaluation unit (8), two safety-related switching outputs (9) and an I/O link connection (10),
wherein the controller (5) comprises inputs (11),
wherein the inputs (11) of the controller (5) are connected to the two safety switching outputs (9) and to the I/O link connector (10) of the sensor (4), respectively,
or wherein at least one bus module (15) comprises inputs (11),
wherein the inputs (11) of the bus module (15) each being connected to the two safety-related switching outputs (9) and to the I/O link connection (10) of the sensor (4), and the bus module (15) comprises an interface which is connected to an input (11) of the controller (5),
wherein the sensor (4) comprises a first memory unit (12) for storing a selection of valid identification codes (3),
wherein, when a valid transponder (2) is detected, a signal is output on the safety-related switching output (9) and the identification code (3) is output on the I/O link connection (10),
**characterized in that** the controller (5) comprises a second memory unit (13) for storing the selection of valid identification codes (3),
wherein the controller (5) is adapted to compare the selection of valid identification codes (3) with the read identification code (3) and, in the event of a valid comparison, a checked result signal is generated, wherein upon detection of signals on the safety-related switching outputs (9) the result signal is generated.

2. Method according to claim 1, **characterized in that** the selection of valid identification codes (3) is a selection from 1 to 10000, a selection from 1 to 1000 or in particular a selection from 1 to 100 identification codes (3) from a plurality of identification codes (3).

3. Method according to at least one of the preceding claims, **characterized in that** the identification code (3) is transmitted on the I/O link connector (10) in a noninverted and inverted manner.

4. Method according to at least one of the preceding claims, **characterized in that**, in addition to the identification code (3), a verification code (14) is also transmitted, whereby the system (1) is tested.

5. System (1) for identifying transponders (2) on the basis of identification codes (3), having a sensor (4) and a controller (5), the sensor (4) having a base housing (6), the base housing (6) having an RFID reader (7), a control and evaluation unit (8), two safety-related switching outputs (9) and an I/O link connection (10),
wherein the controller (5) has inputs (11), wherein the inputs (11) of the controller (5) are respectively connected to the two safety-related switching outputs (9) and the I/O link connection (10) of the sensor,
or at least one bus module (15) has inputs (11), the inputs (11) of the bus module (15) each being connected to the two safety-related switching outputs (9) and the I/O link connection (10) of the sensor (4), and the bus module (15) has an interface which is connected to an input (11) of the controller (5),
wherein the sensor (4) comprises a first memory unit (12) for storing a selection of valid identification codes (3),
wherein the control and evaluation unit (8) is designed to output a signal on the safety-related switching output (9) and the identification code (3) on the I/O link connection (10) when a valid transponder (2) is detected,
**characterized in that** the controller (5) comprises a second memory unit (13) for storing the selection of valid identification codes (3),
wherein the controller (5) is adapted to compare the selection of valid identification codes (3) with the read identification code (3) and to generate a checked result signal in the event of a valid comparison, wherein the result signal is generated upon detection of signals on the safety-related switching outputs (9).

## Revendications

1. Procédé d'identification de transpondeurs (2) sur la base de codes d'identification (3) avec un système (1) comprenant un capteur (4) et une commande (5), dans lequel le capteur (4) comprend un boîtier de base (6),
dans lequel le boîtier de base (6) comprend un lecteur RFID (7), une unité de commande et d'évaluation (8), deux sorties de commutation de sécurité (9) et une connexion de I/O-Link (10),
dans lequel la commande (5) comprend des entrées (11),
dans lequel les entrées (11) de la commande (5) sont respectivement connectées aux deux sorties de commutation de sécurité (9) et à la connexion de I/O-Link (10) du capteur (4),
ou au moins un module de bus (15) comprend des entrées (11),
les entrées (11) du module de bus (15) étant respectivement reliées aux deux sorties de commutation de sécurité (9) et à la connexion de I/O-Link (10) du capteur (4), et le module de bus (15) comprend une interface qui est reliée à une entrée (11) de la commande (5),
dans lequel le capteur (4) comprend une première mémoire (12) pour stocker une sélection de codes d'identification valides (3),
dans lequel, lorsqu'un transpondeur valide (2) est détecté, un signal est émis sur la sortie de commutation de sécurité (9) et le code d'identification (3) est émis sur la connexion de I/O-Link (10),
**caractérisé en ce que** la commande (5) comprend une deuxième mémoire (13) pour stocker la sélection de codes d'identification valides (3),
dans lequel la commande (5) est configurée pour comparer la sélection de codes d'identification valides (3) avec le code d'identification lu (3) et, en cas de comparaison valide, un signal de résultat vérifié est généré, dans lequel lors de la détection de signaux sur les sorties de commutation de sécurité (9), le signal de résultat est généré.

2. Procédé selon la revendication 1, **caractérisé en ce que** la sélection de codes d'identification valides (3) est une sélection de 1 à 10000, une sélection de 1 à 1000 ou en particulier une sélection de 1 à 100 codes d'identification (3) parmi une pluralité de codes d'identification (3).

3. Procédé selon l'une des revendications précédentes, **caractérisé en ce que** le code d'identification (3) est transmis sur la connexion de I/O-Link (10) de manière non inversée et inversée.

4. Procédé selon l'une des revendications précédentes, **caractérisé en ce qu'**en plus du code d'identification (3), un code de vérification (14) est également transmis, ce qui permet de tester le système (1).

5. Système (1) d'identification de transpondeurs (2) sur la base de codes d'identification (3), comprenant un capteur (4) et une commande (5), dans lequel le capteur (4) comprend un boîtier de base (6), dans lequel le boîtier de base (6) comprend un lecteur RFID (7), une unité de commande et d'évaluation (8), deux sorties de commutation de sécurité (9) et une connexion de I/O-Link (10), dans lequel la commande (5) comprend des entrées (11), dans lequel les entrées (11) de la commande (5) sont respectivement connectées aux deux sorties de commutation de sécurité (9) et à la connexion de I/O-Link (10) du capteur, ou au moins un module de bus (15) comprend des entrées (11), les entrées (11) du module de bus (15) étant respectivement reliées aux deux sorties de commutation de sécurité (9) et à la connexion de I/O-Link (10) du capteur (4), et le module de bus (15) comprend une interface qui est reliée à une entrée (11) de la commande (5),
dans lequel le capteur (4) comprend une première mémoire (12) pour stocker une sélection de codes d'identification valides (3),
dans lequel l'unité de commande et d'évaluation (8) est configurée pour émettre un signal sur la sortie de commutation de sécurité (9) et le code d'identification (3) sur la connexion de I/O-Link (10) lorsqu'un transpondeur (2) valide est détecté,
**caractérisé en ce que** la commande (5) comprend une deuxième mémoire (13) pour stocker la sélection de codes d'identification valides (3),
dans lequel la commande (5) est configurée pour comparer la sélection de codes d'identification valides (3) avec le code d'identification lu (3) et en cas de comparaison valide, un signal de résultat vérifié est généré, dans lequel lors de la détection de signaux sur les sorties de commutation de sécurité (9), le signal de résultat est généré.
